(19) Europäisches Patentamt
European Patent Office
Office européen des brevets

(11) **EP 1 664 675 B1**

(12) **FASCICULE DE BREVET EUROPEEN**

(45) Date de publication et mention
de la délivrance du brevet:
**23.04.2008 Bulletin 2008/17**

(21) Numéro de dépôt: **04766597.1**

(22) Date de dépôt: **25.08.2004**

(51) Int Cl.:
***G01C 19/72*** *(2006.01)*      ***G01J 9/02*** *(2006.01)*

(86) Numéro de dépôt international:
**PCT/EP2004/051904**

(87) Numéro de publication internationale:
**WO 2005/031261 (07.04.2005 Gazette 2005/14)**

(54) **DISPOSITIF CAPTEUR DE VITESSE DE ROTATION INTERFEROMETRIQUE A FIBRE OPTIQUE**

FASEROPTISCHE INTERFEROMETRISCHE MESSVORRICHTUNG ZUR
DREHGESCHWINDIGKEITSMESSUNG

INTERFEROMETRIC OPTICAL FIBRE ROTATION RATE SENSING DEVICE

(84) Etats contractants désignés:
**DE FR GB**

(30) Priorité: **26.09.2003 FR 0311317**

(43) Date de publication de la demande:
**07.06.2006 Bulletin 2006/23**

(73) Titulaire: **Thales**
**92200 Neuilly Sur Seine (FR)**

(72) Inventeurs:
• **HUIGNARD, Jean-Pierre,**
**THALES Intell. Property**
**94117 Arcueil Cedex (FR)**

• **BRIGNON, Arnaud,**
**THALES Intellectual Property**
**94117 Arcueil Cedex (FR)**

(74) Mandataire: **Chaverneff, Vladimir et al**
**Marks & Clerk France**
**31-33 Avenue Aristide Briand**
**94117 Arcueil Cedex (FR)**

(56) Documents cités:
**FR-A- 2 516 232          US-A- 4 765 740**

## Description

La présente invention se rapporte à un dispositif capteur de vitesse de rotation (gyromètre) interférométrique à fibre optique.

Le dispositif capteur de vitesse de rotation auquel se rapporte l'invention est basé sur un principe interférométrique à deux ondes dans lequel l'un des miroirs est un composant d'optique non linéaire du type miroir à conjugaison de phase. Le système de gyrométrie réalisé à partir de ce capteur repose sur les deux propriétés suivantes de l'interféromètre qui ont été mises en évidence pour la première fois dans la référence suivante : Ph. Graindorge et al « Forced reciprocity using phase conjugation » in Fiber Optic Rotation Sensors - Springer Verlag, 1982.

Ces propriétés sont les suivantes :

- Si un déphasage réciproque $\delta\varphi_r$ est introduit sur lc bras signal, il n'est pas vu par le détecteur ($+\varphi_r - \varphi_r = 0$).
- Si un déphasage non réciproque $\varphi_{nr}$ est introduit sur le bras signal, on mesure après détection une variation de phase $2\varphi_{nr}$.

Par conséquent, l'interféromètre ne voit que les effets de déphasage non réciproque, ce qui est le cas de l'effet Sagnac, mis à profit pour réaliser un capteur de vitesse de rotation.

La génération de l'onde conjuguée est réalisée dans le milieu laser lui-même. C'est une source monomode et monofréquence état solide. Des expériences de conjugaison de phase efficaces ont déjà fait l'objet de publications, en particulier dans les matériaux lasers Nd-YAG et Nd-YVO$_4$ - (Voir : A. Brignon et al « Phase conjugation in a continuous wave diode pumped Nd-YVO$_4$ laser» in Applied Physics B, 1999). Pour réaliser un gyromètre, le faisceau issu du laser est injecté dans une boucle de fibre (de diamètre D et à N spires, ce qui fait que la longueur L de la fibre fibre est: $L = N \times \pi D$).

On connait des gyromètres à fibre optique utilisant une fibre optique monomode à maintien de polarisation ainsi qu'un miroir à conjugaison de phase par exemple d'après le document FR 2 516 232. Une fibre optique monomode est relativement difficile à aligner optiquement avec les dispositifs optiques qui doivent lui être couplés.

La présente invention a pour objet un capteur de vitesse de rotation à fibre optique pouvant utiliser une fibre optique à grand coeur, facile à aligner optiquement avec les dispositifs qui lui sont associés.

Le dispositif capteur de vitesse de rotation interférométrique à fibre optique de l'invention comporte une source laser associée à une fibre optique et à un dispositif réalisant l'interférence entre le faisceau de la source laser et le faisceau issu de la fibre optique, et il est caractérisé en ce que la source laser est une cavité optique à milieu laser à gain et qu'il comporte sur le trajet du faisceau de sortie de la cavité laser un dispositif séparateur de faisceaux associé à un dispositif réfléchissant, le faisceau séparé du faisceau de sortie de la cavité laser étant envoyé dans une des extrémités de la fibre optique dont l'autre extrémité est orientée vers le miroir non linéaire que constitue le milieu laser à gain, le dispositf séparateur étant suivi d'un détecteur.

La présente invention sera mieux comprise à la lecture de la description détaillée d'un mode de réalisation, pris à titre d'exemple non limitatif et illustré par le dessin annexé, sur lequel :

- la figure 1 est un schéma simplifié d'un capteur interférométrique conforme à l'invention,
- la figure 2 est un schéma simplifié d'un séparateur diffractif pouvant être utilisé dans le capteur de l'invention,
- la figure 3 est un schéma simplifié d'un capteur interférométrique conforme à l'invention, incorporant le séparateur de la figure 2, et
- la figure 4 est un schéma partiel d'un capteur interférométrique conforme à l'invention, utilisant une fibre optique sans maintien de polarisation.

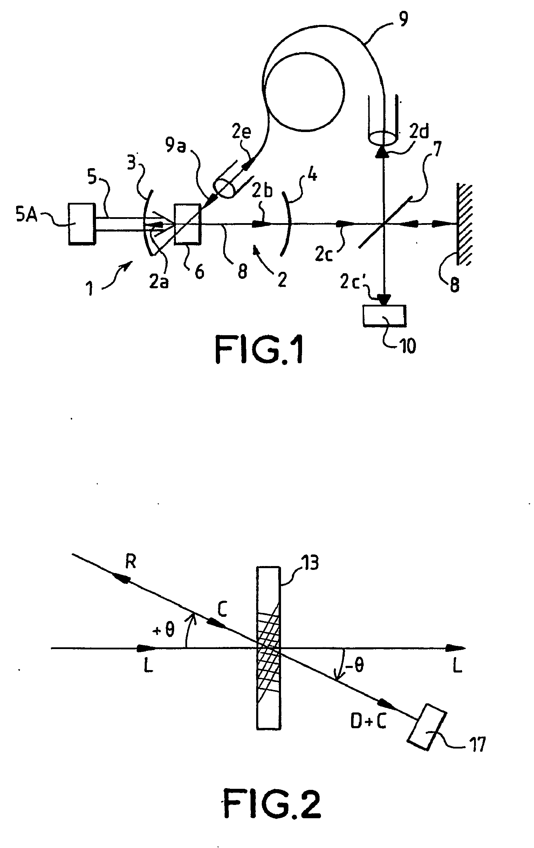

Le dispositif interférométrique schématisé en figure 1 comporte : un laser compact 1, qui est dans le cas présent un milieu à gain constitué par une cavité optique 2 définie entre deux miroirs 3, 4 et pompée par un faisceau 5 émis par des diodes de pompage 5A, un milieu laser 6 étant disposé dans cette cavité 2. Ce laser est monomode et monofréquence et fonctionne en mode continu et polarisé. A l'intérieur de la cavité 2, oscillent deux faisceaux contrapropagatifs 2a et 2b. Sur le trajet du faisceau de sortie 2c du laser 1, on dispose une lame séparatrice 7, et derrière cette lame, dans le prolongement du même trajet, un miroir 8, perpendiculaire à ce trajet. Le faisceau 2d, prélevé par la lame 7 à partir du faisceau 2c, est injecté dans une extrémité d'une fibre optique 9 en forme de bobine plate, bobinée régulièrement. L'autre extrémité de la fibre 9 est dirigée vers le centre du milieu laser 6 pour y intersecter les faisceaux 2a et 2b. Le faisceau 9a sortant de la fibre 9 en direction du milieu à gain 6 interfère avec les faisceaux 2a et 2b à l'intérieur du milieu 6 en créant un hologramme dynamique. Les faisceaux 2a et 2b, en se diffractant sur cet hologramme, génèrent un faisceau conjugué 2e qui est envoyé dans la fibre 9. En sortant de la fibre 9, ce faisceau 2e traverse la lame 7 et arrive sur un détecteur photoélectrique 10, sur lequel arrive également un faisceau 2c' qui représente la partie du faisceau 2c réfléchie par le miroir 8 et par la lame 7 en direction du détecteur 10. Ces deux faisceaux 2e et 2c' interfèrent entre eux sur le détecteur 10.

L'ensemble décrit ci-dessus constitue l'équivalent d'un interféromètre de Michelson dans lequel l'un des miroirs est un miroir non linéaire constitué par le milieu à gain 6.

Au niveau du photodétecteur 10, si $\varphi$ est le dé-

phasage entre les deux faisceaux 2e et 2c', l'expression de l'intensité détectée par le détecteur 10 est de la forme : $I_D = I_0 (1+ \cos \varphi)$. La position du miroir 8 est choisie pour réaliser la condition $\varphi = \dfrac{\pi}{4}$ qui permet de se situer dans la zone de réponse linéaire de l'interféromètre. Dans ces conditions le signal $I_D$ issu du photodétecteur 10 s'écrit :

$$I_D = \frac{I_0}{2} x \delta\varphi_{NR}$$

où $\delta\varphi_{NR}$ est le déphasage non réciproque dû à l'effet Sagnac dans la boucle de fibre 9 de N spires.

$$\delta\varphi_{NR} = \frac{4\pi LD}{\lambda_0 c_0} x \Omega$$

avec :

  $\Omega$ = vitesse de rotation angulaire de la bobine de fibre optique 9
  D = diamètre de la bobine de fibre optique 9
  L = longueur de la fibre optique
  $\lambda_0$ = longueur d'onde du laser 1 dans le vide
  $c_0$ = vitesse de la lumière dans le vide.

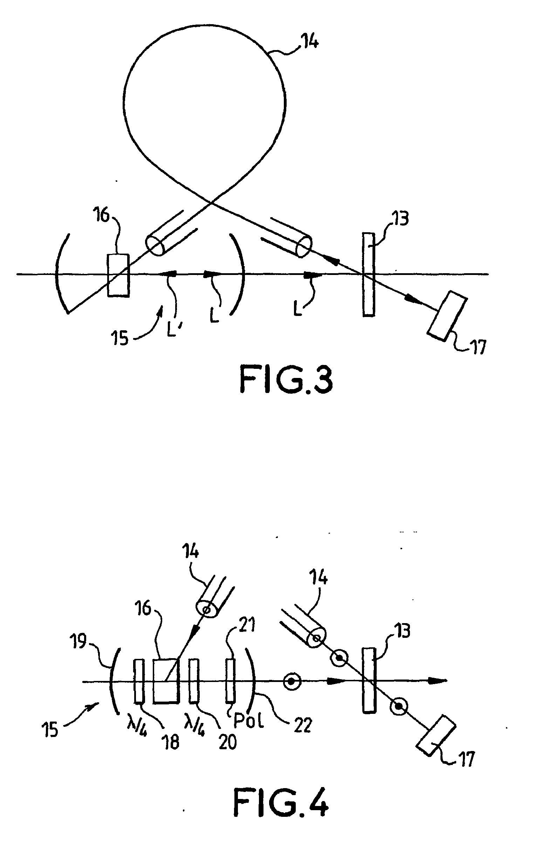

Un autre mode de réalisation du dispositif de l'invention est représenté en figures 2 et 3, la figure 2 représentant un détail de l'ensemble schématisé en figure 3. Le dispositif capteur représenté en figure 3 est similaire à celui de la figure 1, à la différence principale que le séparateur de faisceau 7 est remplacé par un réseau de diffraction fonctionnant à la fois en mode réflexion et en mode transmission. Ce dispositif capteur comporte essentiellement une cavité laser 15, similaire à la cavité 2, une bobine plate de fibre optique 14 et un dispositif 13 séparateur de faisceaux et réfléchissant, représenté en détail en figure 2.

Plus précisément, comme indiqué sur la figure 2, le faisceau L issu de la cavité laser 15 est difiracté dans la direction $\pm \theta$, respectivement par réflexion (faisceau R) et transmission (faisceau D). Ce type de réseau est par exemple réalisé de façon connue en soi par des techniques d'inscription holographique dans des matériaux photopolymères (réseau par variation d'indice photoinduite ou réseau de relief. Ces deux types de réseaux peuvent être également multiplexés dans le même volume de matériau photopolymère. Le faisceau réfléchi R est couplé dans la bobine de fibre 14 (figure 3) puis conjugué après réflexion sur le miroir non linéaire que constitue le milieu laser 16 (similaire ou identique à celui de la cavité 2 de la figure 1). Le faisceau conjugué C est

envoyé dans la fibre 14 et interfère dans le réseau 13 avec le faisceau L issu de la source. L'intérêt de ce composant diffractif est de pouvoir réaliser facilement la condition $\varphi = \dfrac{\pi}{4}$ pour la détection interférométrique. En interférant avec le faisceau L, le faisceau conjugué C crée une structure de franges dont la période correspond au pas du réseau par transmission. Dans ces conditions, sur le détecteur 17 interfèrent le faisceau C directement transmis par le réseau et le faisceau D issu de la diffraction de L par le réseau 13. Il est connu des phénomènes de couplage de faisceaux par les réseaux que le déphasage entre les deux faisceaux D et C est contrôlé par la position du réseau par rapport aux franges d'interférences entre C et L. Pour réaliser la condition de détection linéaire, on assurera un décalage spatial du réseau d'un quart de période lors de son inscription.

Le capteur de vitesse de rotation par interféromètre à fibre conforme à l'invention est compatible avec l'utilisation d'une fibre multimode. Dans la mesure où l'on réalise une fonction de mélange à quatre faisceaux dans la cavité ( à savoir : les faisceaux L et L', qui se propagent en sens contraires dans la cavité 15 et les faisceaux R et C), le faisceau issu de la fibre peut être multimode : par conjugaison de phase on retrouve un faisceau C à onde plane qui est identique à celui injecté dans la bobine de fibre optique.

Le principe de fonctionnement du dispositif de l'invention est également compatible avec l'utilisation d'une fibre optique sans maintien de polarisation. Comme précisé dans la référence : « Gain grating analysis of a self starting... » de P. Sillard et al. IEEE - J.Q.E March 98, cette fonction est obtenue en introduisant dans la cavité 15 (figure 4) une première lame quart d'onde 18 entre le miroir 19 et le milieu laser à gain 16, une deuxième lame quart d'onde 20 de l'autre côté du milieu laser 16, et un polariseur 21 entre la lame 20 et le deuxième miroir de cavité 22. Les deux lames quart d'onde 18, 20 et le polariseur 21 permettent de créer deux faisceaux laser contrapropagatifs, de polarisations circulaires et orthogonales entre elles (à savoir : polarisations circulaire gauche et circulaire droite). Il est connu par ailleurs que le mélange à quatre faisceaux avec ces deux faisceaux polarisés circulairement permet de réaliser de la conjugaison de phase vectorielle, c'est-à-dire que la dépolarisation de la fibre se trouve ainsi corrigée.

Selon des exemples de réalisation du dispositif de l'invention, le milieu laser était en Nd-YAG puis en Nd-YVO$_4$, la fibre était monomode, puis multimode à faibles pertes, et le composant diffractif était réalisé par holographie sur un matériau photopolymère.

Les avantages du dispositif de l'invention sont les suivants :

- il met en oeuvre une source laser continue et compacte, pompée par des diodes et servant à la génération d'une onde conjuguée par mélange à quatre faisceaux intracavité.

- l'utilisation d'un séparateur de faisceau réalisé par un composant diffractif permet de fonctionner dans la région de réponse linéaire de l'interféromètre.
- le dispositif peut utiliser une bobine de fibre multimode ou de fibre monomode sans maintien de polarisation.
- l'interféromètre n'est sensible qu'aux effets de déphasage non réciproques. En particulier son point de fonctionnement n'est pas affecté par les variations lentes de chemin optique dans la bobine de fibre (dues à des variations de température).

## Revendications

1. Dispositif capteur de vitesse de rotation interférométrique à fibre optique comportant une source laser (2, 15) associée à une fibre optique (9,14) et à un dispositif réalisant l'interférence entre le faisceau de la source laser et le faisceau issu de la fibre optique, **caractérisé en ce que** la source laser est une cavité optique à milieu laser à gain (6, 16) et qu'il comporte sur le trajet du faisceau de sortie de la cavité laser un dispositif séparateur de faisceaux (7, 13) associé à un dispositif réfléchissant (8, 13), le faisceau (2d, R) séparé du faisceau de sortie de la cavité laser (2c, L) étant envoyé dans une des extrémités de la fibre optique dont l'autre extrémité est orientée vers le miroir non linéaire que constitue le milieu laser à gain, le dispositf séparateur étant suivi d'un détecteur (10, 17).

2. Dispositif selon la revendication 1, **caractérisé en ce que** le dispositif réfléchissant associé au séparateur est distinct de celui-ci et est un miroir (8).

3. Dispositif selon la revendication 1, **caractérisé en ce que** le séparateur est un réseau de diffraction fonctionnant à la fois en réflexion et en transmission (13) et joue ainsi le rôle de dispositif réfléchissant.

4. Dispositif selon la revendication 2, **caractérisé en ce que** la position dudit miroir est réglée pour obtenir un déphasage de $\pi/4$ entre le faisceau réfléchi par ledit miroir et le faisceau rprovenant de la fibre optique.

5. Dispositif selon la revendication 3, **caractérisé en ce que** le réseau est un réseau de variation d'indice.

6. Dispositif selon la revendication 3, **caractérisé en ce que** le réseau est un réseau de relief.

7. Dispositif selon la revendication 3, **caractérisé en ce que** le réseau est un réseau résultant du multiplexage d'un réseau de variation d'indice et d'un réseau de relief.

8. Dispositif selon l'une des revendications précédentes, **caractérisé en ce que** la fibre optique est une fibre multimode.

9. Dispositif selon lune des revendications précédentes, **caractérisé en ce que** l'on dispose dans la cavité laser deux lames quart d'onde (18, 20) et un polariseur (21).

10. Dispositif selon la revendication 9, **caractérisé en ce que** la fibre optique est une fibre sans maintien de polarisation.

## Claims

1. Fibre-optic interferometric rotation rate sensing device comprising a laser source (2, 15) linked to an optical fibre (9, 14) and to a device producing interference between the beam of the source laser and the beam leaving the optical fibre, **characterized in that** the source laser is an optical cavity with a laser gain medium (6, 16) and **in that** it comprises a beamsplitting device (7, 13) in the path of the output beam of the laser cavity that is connected to a reflecting device (8, 13), the beam (2d, R) separated from the output beam of the laser cavity (2c, L) being sent into one end of the optical fibre, the other end of which is directed towards the non-linear mirror constituted by the laser gain medium, the splitter device being followed by a detector (10, 17).

2. Device according to Claim 1, **characterized in that** the reflecting device associated with the splitter is distinct from it and is a mirror (8).

3. Device according to Claim 1, **characterized in that** the splitter is a diffraction grating functioning both in reflection and in transmission (13) and thus plays the role of a reflecting device.

4. Device according to Claim 2, **characterized in that** the position of the said mirror is controlled to obtain a phase shift of $\pi/4$ between the beam reflected by the said mirror and the beam coming from the optical fibre.

5. Device according to Claim 3, **characterized in that** the grating is a variable index grating.

6. Device according to Claim 3, **characterized in that** the grating is a relief grating.

7. Device according to Claim 3, **characterized in that** the grating is a grating resulting from the multiplexing of a variable index grating and of a relief grating.

8. Device according to one of the preceding claims, **characterized in that** the optical fibre is a multimode fibre.

9. Device according to one of the preceding claims, **characterized in that** two quarter-wave plates (18, 20) and a polarizer (21) are placed in the laser cavity.

10. Device according to Claim 9, **characterized in that** the optical fibre is a non-polarization-maintaining fibre.

**Patentansprüche**

1. Faseroptische interferometrische Messvorrichtung zur Drehgeschwindigkeitsmessung mit einer Laserquelle (2,15), die einer Glasfaser (9,14) und einer Vorrichtung zur Ausführung der Interferenz zwischen dem Bündel der Laserquelle und dem von der Glasfaser stammenden Bündel zugeordnet ist, **dadurch gekennzeichnet, dass** die Laserquelle ein optischer Hohlraum mit verstärktem Lasermedium (6, 16) ist und sie auf der Bahn des Ausgangsbündels des Laserhohlraums eine Bündeltrennvorrichtung (7, 13) umfasst, die einer reflektierenden Vorrichtung (8, 13) zugeordnet ist, wobei das Bündel (2d, R), das vom Ausgangsbündel des Laserhohlraums (2c, L) getrennt ist, in eines der Enden der Glasfaser geschickt ist, deren anderes Ende zum nicht linearen Spiegel, den das verstärkte Lasermedium bildet, gerichtet ist, wobei sich an die Trennvorrichtung ein Detektor (10, 17) anschließt.

2. Vorrichtung nach Anspruch 1, **dadurch gekennzeichnet, dass** sich die reflektierende Vorrichtung, die der Trennvorrichtung zugeordnet ist, von dieser unterscheidet und ein Spiegel (8) ist.

3. Vorrichtung nach Anspruch 1, **dadurch gekennzeichnet, dass** die Trennvorrichtung ein Diffraktionsnetz ist, das sowohl durch Zurückstrahlung als auch durch Übertragung (13) funktioniert und somit die Rolle der reflektierenden Vorrichtung spielt.

4. Vorrichtung nach Anspruch 2, **dadurch gekennzeichnet, dass** die Position des Spiegels eingestellt ist, um eine Phasenverschiebung von $\pi/4$ zwischen dem durch den Spiegel zurückgestrahlten Bündel und dem von der Glasfaser kommenden Bündel zu erreichen.

5. Vorrichtung nach Anspruch 3, **dadurch gekennzeichnet, dass** das Netz ein Indexvariationsnetz ist.

6. Vorrichtung nach Anspruch 3, **dadurch gekennzeichnet, dass** das Netz ein Reliefnetz ist.

7. Vorrichtung nach Anspruch 3, **dadurch gekenn-**

**zeichnet, dass** das Netz ein aus dem Multiplexen eines Indexvariationsnetzes und eines Reliefnetzes resultierendes Netz ist.

8. Vorrichtung nach einem der vorhergehenden Ansprüche, **dadurch gekennzeichnet, dass** die Glasfaser eine Multimodenfaser ist.

9. Vorrichtung nach einem der vorhergehenden Ansprüche, **dadurch gekennzeichnet, dass** man im Laserhohlraum über zwei Viertelwellenplatten (18,20) und einen Polarisator (21) verfügt.

10. Vorrichtung nach Anspruch 9, **dadurch gekennzeichnet, dass** die Glasfaser eine Faser ohne Erhaltung der Polarisation ist.

FIG.1

FIG.2

FIG.3

FIG.4

**EP 1 664 675 B1**

**Documents brevets cités dans la description**

- FR 2516232